**Europäisches Patentamt**

**European Patent Office**

**Office européen des brevets**

(19)

(11) Veröffentlichungsnummer: **0 198 121**
**B1**

(12) # EUROPÄISCHE PATENTSCHRIFT

(45) Veröffentlichungstag der Patentschrift:
**19.04.89**

(51) Int. Cl.⁴: **F 27 D 3/02,** F 27 B 9/24,
F 27 D 3/00, B 65 G 39/02

(21) Anmeldenummer: **85116369.1**

(22) Anmeldetag: **20.12.85**

(54) **Rollenofen zum Brennen eines plattenförmigen keramischen Brenngutes.**

(30) Priorität: **18.04.85 DE 3514086**

(43) Veröffentlichungstag der Anmeldung:
**22.10.86 Patentblatt 86/43**

(45) Bekanntmachung des Hinweises auf die Patenterteilung:
**19.04.89 Patentblatt 89/16**

(84) Benannte Vertragsstaaten:
**AT CH DE FR GB IT LI NL SE**

(56) Entgegenhaltungen:
**DE-A-2 642 627**
**DE-A-2 656 989**
**DE-A-3 032 452**
**US-A-1 416 727**
**US-A-3 985 495**

(73) Patentinhaber: **Buchtal Gesellschaft mit beschränkter Haftung, Buchtalweg, D-8472 Schwarzenfeld(Opf.) (DE)**

(72) Erfinder: **Bard, Martin, D-8450 Anberg (DE)**

(74) Vertreter: **Betzler, Eduard, Dipl.- Phys., Postfach 70 02 09 Plinganserstrasse 18a, D-8000 München 70 (DE)**

**Beschreibung**

Die Erfindung bezieht sich auf ein Aggregat gemäß den Merkmalen des Oberbegriffes des Patentanspruches 1.

Bei das Brenngut einschichtig und ohne Brennhilfsmittel aus feuerfestem Material brennenden Rollenöfen durchläuft das Brenngut die Vorheiz-, Brenn- und Kühlzone aus einem Rollenteppich, dessen aus einem Spezialstahl oder Keramikmaterial bestehende Rollen von außerhalb des Ofens angetrieben werden. Der besondere Vorteil dieser Öfen besteht darin, daß der Einsatz von Wagen und feuerfesten Brennhilfsmitteln entfällt. Diese Transport- und Stützmittel stellen eine erhebliche Masse dar, die vom Ofen aufgeheizt werden muß und in der Kühlzone wieder Zur Abkühlung zu bringen ist. Es wird also ein erheblicher Teil der dem Ofen zum Brand des Brenngutes zugeführten Energie ungenützt verschwendet.

Bei solchen einschichtig und ohne Einsatz von Transport- und Brennhilfsmitteln betriebenen Rollenöfen wird nicht nur eine wesentliche Energieeinsparung erreicht, sondern es läßt sich auch der Brennvorgang schneller und gleichmäßiger durchführen, wobei man außerdem noch zu einem erheblich verkürzten Produktionszyklus gelangt.

Im allgemeinen ist es jedoch nicht zu vermeiden, daß die das Brenngut transportierenden Rollen sich unter dem Einfluß der im Ofen herrschenden hohen Temperaturen etwas verbiegen, unrund werden oder sonstige Deformationen erfahren.

Außerdem kann sich Material von der Glasur des plattenförmigen Brenngutes und aus Masseresten od. dgl. auf den Rollen aufbauen. Diese Beeinflussung der Rollen durch das Brenngut und durch die Atmosphäre sowie die Temperatur ist unvermeidbar. Die Konsequenz des daraus resultierenden Unrundwerdens oder Unrundlaufens der Rollen ist, daß sich das plattenförmige Brenngut beim Durchgang durch den Ofen wechselseitig verschiebt, so daß es zu unbeabsichten Berührungen des plattenförmigen Brenngutes an den Rändern kommt. Dabei treten mitunter Verbackungen infolge der Glasur oder sonstige Beschädigungen der Ränder des plattenförmigen Gutes auf. Außerdem zeigt es sich, daß das plattenförmige Gut auf seinem Weg durch den Ofen insbesondere zu dessen seitlichen Rändern wandert, wo es sich gegebenenfalls aufstaut, was zu Beschädigungen des Brenngutes und/oder Produktionssödrung führen kann. Der bisher gewählte Weg zur Lösung dieses Problems bestand darin, an den Rändern einen Freiraum zu belassen, der etwa 15 bis 20 % der Ofenbreite entspricht. Damit wird aber die Ofenkapazität nur unvollkommen ausgenutzt.

Das Problem, dem plattenförmigen Gut eine solche Form zu geben, daß gegenseitige Berührungen infolge des unvermeidbaren Unrundlaufens der Rollen bedeutungslos bleiben, ist bereits in der DE-PS-3 032 451 angegangen und dadurch gelöst worden, daß das plattenförmige Gut am Umfang wenigstens teilweise einen Rand mit Sollbruchstelle gegenüber den Plattenumfang aufweist.

Damit besteht die Möglichkeit, den Rand des plattenförmigen Gutes nach dem Brennen längs der Sollbruchstelle ohne Schwierigkeiten zu entfernen.

Selbstverständlich erfordert dieses Vorgehen einen zusätzlichen Arbeitsgang nicht nur bei der Formgebung des plattenförmigen keramischen Gutes, sondern auch an dem aus dem Ofen austretenden gebrannten keramischen plattenförmigen Gut.

Eine Lösung des Problems dem Anbacken des Brenngutes an den Rollen des Rollenofens abzuhelfen wird in der DE-PS-3 301 660 angegeben, wo eine Vorrichtung zum Abstützen flacher keramischer Gegenstände in einem Rollenofen beschrieben wird, die trotz Glasurniederschlags eine einwandfreie Abstützung und einen einwandfreien Transport der zu brennenden Gegenstände gewährleisten soll, ohne daß Anbackungen des Brenngutes an den Rollen auftreten. Die Lösung wird darin gesehen, daß die Rollen Erhöhungen und Vertiefungen aufweisen, wobei die zu brennenden Gegenstände jeweils nur auf den Erhöhungen aufliegen. Diese Erhöhungen und Vertiefungen verlaufen nach der Lehre dieser Patentschrift in Längsrichtung der Transportrollen, die also als Hohlrohre ausgebildet sind, die senkreicht zur Transportrichtung entsprechende Erhebungen und Vertiefungen aufweisen.

Auch bei einer derartigen Ausbildung des Rollenteppichs des Brennofens sind jedoch Verformungen der Rollen unvermeidbar und damit ist auch ein entsprechendes Abgleiten des zu brennenden keramischen plattenförmigen Gutes zur Seite des Ofenkanals hin unvermeidbar, so daß es auch bei einer solchen Ausgestaltung der Rollen des Rollenteppichs im Brennofen zu Stauungen, zum Übereinanderschieben und zu sonstigen Schwierigkeiten im Ofenkanal kommen kann.

Es sind bereits Förderrollen bekannt (DE-A-2 642 627) für den Transport von Härtegut durch ein Härtebad bekannt, die profilierte Härterollen aufweisen. Dort dient jedoch die Profilierung zur Beeinflussung des Härteeffektes des Härtegutes.

Schließlich sind Fördereinrichtungen für den Transport von Brenngut durch einen Ofen bekannt (US-A-1 416 727), bei denen Förderrollen Verwendung finden, die insofern profiliert sind, als auf den als Achsen dienenden Rollen Scheiben angeordnet sind, die in ihrer Kontur mit der Kontur der Unterseite von plattenförmigen Trögen übereinstimmen. Jedoch dienen diese Scheiben nicht unmittelbar zum Transport von Brenngut, da das Brenngut auf der Oberseite der auf den Scheiben aufliegenden Trögen transportiert wird.

Aufgabe der Erfindung ist es, ein Aggregat aus einem Rollenofen und darin zu transportierendes plattenförmiges Brenngut zu schaffen, bei welcher ein Abgleiten des zu brennenden keramischen Brenngutes zur Seite des Ofenkanals hin vermieden und somit Stauungen, Übereinanderschieben und sonstige Schwierigkeiten im Ofenkanal ausgeschlossen werden.

Diese Aufgabe wird erfindungsgemäß durch die im kennzeichnenden Teil des Patentanspruches 1 enthaltenen Merkmale gelöst.

Es befinden sich also nicht in Längsrichtung der Rollen und damit quer zur Transportrichtung im Ofen entsprechende Erhebungen und Vertiefungen auf den Rollen, sondern senkrecht zur Längs- und Drehachse der Rollen und damit in Transportrichtung des Brennofens.

Das plattenförmige keramische Brenngut wird auf einem solchen Rollenteppich exakt geführt und verläßt praktisch in dem Muster, in dem es in den Rollenofen einfährt diesen am Ausgangsende, d. h. am Ende der Kühlzone. Ein Auswandern des plattenförmigen keramischen Gutes zur Seite hin ist praktisch ausgeschlossen.

Die Temperaturverteilung im Ofenkanal selbst ist gleichmäßiger, weil es nicht zu wechselseitigen Verschiebungen des Brenngutes kommt und damit zu Leerstellen, wo die Wärmeinwirkung des Ofens nicht auf Brenngut trifft. Von besonderer Bedeutung ist aber die bessere Handhabungsmöglichkeit des plattenförmigen keramischen Gutes am Ofenaustrittsende, wo nunmehr das Vereinzeln der einzelnen ausfahrenden Platten ohne Schwierigkeit vorgenommen werden kann.

Ein in einem derartigen Rollenofen zu brennendes keramisches plattenförmiges Brenngut zeichnet sich vorteilhaft dadurch aus, daß die Tiefe der Rillen der Reliefierung auf der entsprechenden Flabhseite des plattenförmigen Brenngutes zwischen 5 und 10 %, vorzugsweise 7,5 % der Brenngutdicke beträgt. Damit ist eine ausreichende Führung durch die vorstehenden Rippen gewährleistet, andererseits aber auch die Materialstärke des plattenförmigen Brenngutes nicht so geschwächt, daß dieses an Festigkeit verliert.

In weiterer Ausbildung der Erfindung beträgt die Reliefierung vier Rillen pro Zentimeter Breite des plattenförmigen Brenngutes. Sie kann sich über die gesamte Auflagefläche des Brenngutes erstrecken, aber auch auf zueinander parallele Streifen beschränkt sein.

Vorzugsweise sind die Rollen für diesen Rollenofen so ausgebildet, daß die Reliefierung der Rollen des Rollenofens ein kongruentes Abbild der Reliefierung des plattenförmigen keramischen Brenngutes darstellt.

Mit dem Vorschlag nach der Erfindung wird die Ofenkapazität erhöht, das Sortierergebnis verbessert und die eingesetzte Energie so genutzt, das an den gewünschten Stellen voll zur Wirkung kommt.

Die Zeichnung zeigt in

Fig. 1 einen Ausschnitt aus einer Rolle und in
Fig. 2 eine Unteransicht eines plattenförmigen keramischen Brenngutes.

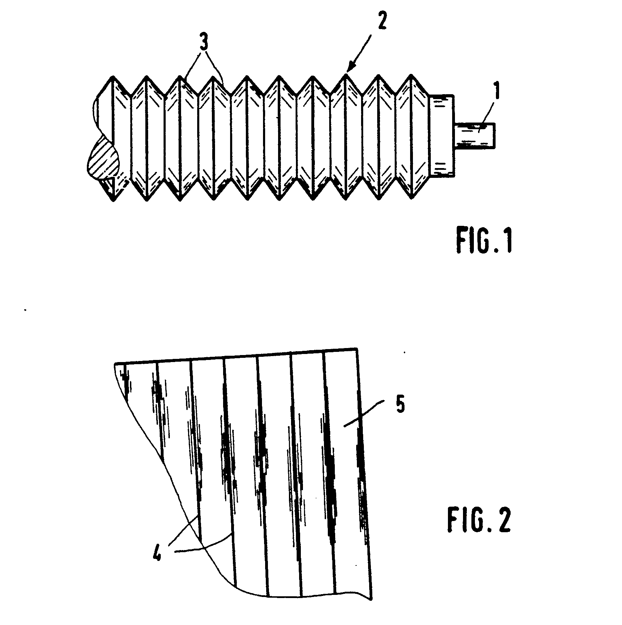

In Fig. 1 ist mit 1 die Achse einer Rolle 2 bezeichnet, die erkennbar eine senkrecht zur Achse 1 stehende Reliefierung 3 aufweist, der nach Fig. 2 eine entsprechende Reliefierung 4 auf der auf der Rolle 2 aufliegenden Seite des plattenförmig keramischen Brenngutes entspricht. Man erkennt aus der Zeichnung ohne weiteres die entsprechende ausgezeichnete Führung des plattenförmigen keramischen Brenngutes 5 auf der Rolle 2.

**Patentansprüche**

1. Aggregat aus einem Rollenofen und darin zu transportierendes plattenförmiges Brenngut (5), das von dem angetriebenen Rollenteppich des Rollenofens einschichtig und liegend durch den Ofenkanal hindurchgeführt wird,
dadurch gekennzeichnet, daß die Rollen (2) auf wenigstens einem Teil ihrer Länge mit über ihren Umfang jeweils in sich geschlossenen Rillen versehen sind, die in Abstand und Tiefe Rillen einer auf der auf den Rollen aufliegenden Flachseite des plattenförmigen Brenngutes (5) vorgesehenen Parallelreliefierung (4) entsprechen.

2. Aggregat nach Anspruch 1,
dadurch gekennzeichnet, daß die Tiefe der Rillen der Reliefierung (4) auf der entsprechenden Flachseite des plattenförmigen Brenngutes (5) Zwischen 5 % und 10 %, vorzugsweise 7,5 % der Brenngutdicke beträgt.

3. Aggregat nach Anspruch 2,
dadurch gekennzeichnet, daß die Reliefierung (4) vier Rillen pro Zentimeter Breite des plattenförmigen Brenngutes (5) beträgt.

4. Aggregat nach einem der vorhergehenden Ansprüche,
dadurch gekennzeichnet, daß die Reliefierung (3) der Rollen (2) des Rollenofens ein kongruentes Abbild der Reliefierung (4) des plattenförmigen keramischen Brenngutes (5) darstellt.

**Claims**

1. An aggregate comprising a roller kiln and tile-shaped firing material (5) to be transported therein that is guided by the driven roller carpet of the roller kiln in one layer and in lying position through the kiln channel, characterized in that the rollers (2) are provided on at least part of their length with grooves closed upon themselves along their periphery and corresponding in their spacing and depth to grooves of a parallel relief (4) provided on the flat side of the tile-shaped firing material (5) lying on the rollers.

2. The aggregate of claim 1, <u>characterized</u> in that the depth of the grooves of the relief (4) on the corresponding flat side of the tile-shaped firing material (5) is between 5 % and 10 %, preferably 7.5 % of the thickness of the firing material.

3. The aggregate of claim 2, <u>characterized</u> in that the relief (4) has four grooves per centimeter of width of the tile-shaped firing material (5).

4. The aggregate of any of the above claims, <u>characterized</u> in that the relief (3) of the rollers (2) of the roller kiln constitutes a congruent image of the relief (4) of the tile-shaped ceramic firing material (5).

**Revendications**

1. Agrégat constitué par un four à rouleaux et par un produit de cuisson (5) en forme de plaques qui doit être transporté dans le four à rouleaux dont le tapis de rouleaux lui fait traverser le canal en une seule couche et à l'horizontale, caractéricé en ce que les rouleaux (2) comportent, sur une partie au moins de leur longueur, des cannelures qui se referment sur leur périphérie et qui, en ce qui concerne leur écartement et leur profondeur, correspondent à des cannelures d'un relief parallèle (4) prévu sur le côté plat du produit de cuisson (5) en forme de plaque qui s'applique contre les rouleaux.

2. Agrégat selon la revendication 1, caractérise en ce que la profondeur des cannelures du relief (4) sur le côté plat correspondant du produit de cuisson (9) en forme de plaques, représente de 5 % à 10 %, de préference 7,5 % de l'épaisseur du produit de cuisson.

3. Agrégat selon la revendication 2, caractérisé en ce que le relief (4) comporte quatre cannelures par centimètre de largeur du produit de cuisson (5) en forme de plaques.

4. Agrégat selon l'une des revendications 1 à 3, caractérisé en ce que le relief (3) des rouleaux (2) du four à rouleaux, représente une image congruente du relief (4) du produit de cuisson (5) céramique en forme de plaques.

FIG.1

FIG.2